# EUROPÄISCHE PATENTANMELDUNG

(11) **EP 0 992 405 A2**
(43) Veröffentlichungstag der Anmeldung: **12.04.2000**
(21) Anmeldenummer: 99116216.5
(22) Anmeldetag: 17.08.1999
(51) Int. Cl.: B60R 21/20

(54) **Armaturentafel**

(30) Priorität: 18.08.1998 DE 19837421
(71) Anmelder: Delphi Technologies, Inc., Troy, MI 48007 (US)
(72) Erfinder: Kansteiner, Udo, 58456 Witten (DE); Kerkhoff, Markus, 42285 Wuppertal (DE)
(74) Vertreter: Manitz, Finsterwald & Partner

(57) **Zusammenfassung**

Die Erfindung betrifft eine Armaturentafel für Kraftfahrzeuge mit einem Basisteil, das einen durch einen sich aufblasenden Luftsack entfernbaren Bereich aufweist, der einen Teil der im eingebauten Zustand zum Fahrgastraum weisenden Fläche des Basisteils bildet, wobei das Basisteil aus einem Kunststoff geringer Dichte, vorzugsweise einem aufgeschäumten Kunststoff, insbesondere expandiertem Polypropylen (EPP) hergestellt ist.

## Beschreibung

Die Erfindung betrifft eine Armaturentafel für Kraftfahrzeuge.

Bei der Herstellung derartiger Armaturentafeln müssen sowohl gestalterische und funktionelle Gesichtspunkte berücksichtigt als auch bestehende Sicherheitsbestimmungen eingehalten werden.

Es ist das der Erfindung zugrundeliegende Problem (Aufgabe), eine Armaturentafel zu schaffen, die an mit Airbags ausgerüsteten Fahrzeugen verwendbar sowie einfach und mit beliebiger Formgebung herstellbar ist, die ein möglichst geringes Gewicht besitzt, die allen Sicherheitsbestimmungen genügt und die zu einem möglichst großen Teil recyclingfähig ist.

Die Lösung dieser Aufgabe erfolgt durch die Merkmale des Anspruchs 1 und insbesondere dadurch, daß ein Basisteil vorgesehen ist, das einen durch einen sich aufblasenden Luftsack entfernbaren Bereich aufweist, der einen Teil der im eingebauten Zustand zum Fahrgastraum weisenden Fläche des Basisteils bildet, wobei das Basisteil aus einem Kunststoff geringer Dichte, vorzugsweise einem aufgeschäumten Kunststoff, insbesondere expandiertem Polypropylen (EPP) hergestellt ist.

Durch die Verwendung eines Kunststoffs geringer Dichte für das Basisteil kann das Gesamtgewicht der Armaturentafel gering gehalten werden.

Darüber hinaus ermöglicht es das Vorsehen des entfernbaren Bereichs am Basisteil, die erfindungsgemäße Armaturentafel in mit Airbags ausgerüsteten Kraftfahrzeugen zu verwenden. Durch die Integration des Austritts für den sich aufblasenden Luftsack in das Basisteil in Form eines entfernbaren Bereiches kann die gesamte Armaturentafel kostengünstig in nur einem Arbeitsschritt hergestellt werden. Des weiteren wird durch die Verwendung lediglich eines einzigen Materials für die Armaturentafel deren Recyclingfähigkeit verbessert.

Gemäß einem bevorzugten Ausführungsbeispiel der Erfindung wird als Material für das Basisteil expandiertes Polypropylen (EPP) verwendet.

Durch die Verwendung dieses Materials können die Herstellungskosten für die Armaturentafel gering gehalten und dennoch die im Hinblick auf die geltenden Sicherheitsbestimmungen erforderlichen Stabilitätskriterien eingehalten werden. Darüber hinaus kann mit EPP als Material für die Armaturentafel diese in jeder gewünschten Form hergestellt werden, so daß mit der Erfindung alle gegenwärtigen und zukünftigen Designanforderungen erfüllt werden können.

Nach einer weiteren bevorzugten Ausführungsform der Erfindung ist die im eingebauten Zustand zum Fahrgastraum weisende Fläche des Basisteils mit einem Überzug in Form einer aus einem thermoplastischen Polyolefin (TPO) hergestellten Kunststoffolie oder aus einem modifizierten Mehrkomponentenmaterial versehen.

Die Verwendung einer derartigen Folie gestattet es, der zum Fahrgastraum weisenden Fläche des Basisteils die jeweils gewünschten Oberflächeneigenschaften zu verleihen. Da gemäß dieser Ausführungsform eine Kombination von Materialien aus einer Materialfamilie erfolgt, werden die vorteilhaften Eigenschaften des für das Basisteil verwendeten EPP und insbesondere die Recyclingfähigkeit der gesamten Armaturentafel nicht beeinträchtigt.

Nach einem weiteren bevorzugten Ausführungsbeispiel der Erfindung sind Schwachstellen des Basisteils in Form von Einschnitten und/oder Vertiefungen an der Rückseite des Basisteils vorgesehen, die im eingebauten Zustand vom Fahrgastraum aus unsichtbar sind. Dadurch kann die erfindungsgemäße Armaturentafel auch in Fahrzeugen ohne Airbag verwendet werden, ohne daß durch vom Fahrgastraum aus sichtbare Luftsackdeckelkonturen der falsche Eindruck erweckt wird, das jeweilige Fahrzeug sei mit einem Airbag ausgestattet.

Durch das Vorsehen eines als Verstärkungs- und/oder Trägerstruktur für das Basisteil ausgebildeten Strukturelementes gemäß einem weiteren bevorzugten Ausführungsbeispiel der Erfindung, wobei vorzugsweise das Basisteil und das Strukturelement fest miteinander verbunden, insbesondere verschweißt sind, wird die Stabilität der erfindungsgemäßen Armaturentafel erhöht und eine einfache Anbringung der Armaturentafel am Fahrzeug ermöglicht.

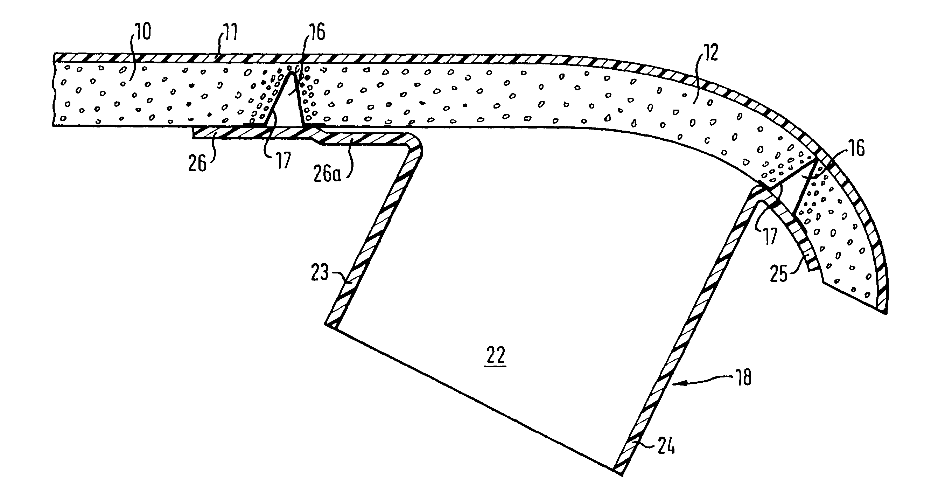

Weitere bevorzugte Ausgestaltungen der Erfindung sind in den Unteransprüchen, der Beschreibung und der Zeichnung beschrieben. Die einzige Figur der Zeichnung zeigt einen Teil einer gemäß der Erfindung ausgebildeten Armaturentafel in einer geschnittenen Seitenansicht.

In der Ausführungsform gemäß der Figur umfaßt die erfindungsgemäße Armaturentafel ein Basisteil 10, das aus expandiertem Polypropylen (EPP) hergestellt ist, wobei grundsätzlich auch ein anderer Kunststoff geringer Dichte, z. B. ein aufgeschäumter Kunststoff verwendet werden kann.

Die im eingebauten Zustand der Armaturentafel zum Fahrgastraum - in der Figur nach oben und nach rechts weisende - Fläche des Basisteils 10 ist mit einer Kunststoffolie 11 überzogen, die aus einem thermoplastischen Polyolefin (TPO) hergestellt ist, grundsätzlich jedoch auch aus einem anderen Material, z. B. einem modifizierten Mehrkomponentenmaterial bestehen kann.

Das Basisteil 10 weist einen entfernbaren Bereich 12 auf, dessen Umriß durch Materialschwachstellen festgelegt ist, die in Form von V-förmigen Vertiefungen 16 auf der Rückseite des Basisteils 10 vorgesehen sind, welche im eingebauten Zustand vom Fahrgastraum aus nicht sichtbar sind. Diese Vertiefungen 16 können beispielsweise durch Eindrücken eines entsprechend geformten Werkzeugs in das noch nicht vollständig ausgehärtete Kunststoffmaterial des Basisteils 10 erzeugt werden, wodurch das Basisteil 10 im Bereich der die Vertiefungen 16 begrenzenden, schräg verlaufenden Seitenwände eine höhere Dichte als angrenzendes Material besitzt.

Des weiteren weist das Basisteil 10 an den die Vertiefungen 16 begrenzenden, schräg verlaufenden Seitenwänden sowie an Bereichen seiner Rückseite, die an die Vertiefungen 16 angrenzen, Verhautungen 17 auf.

Die im eingebauten Zustand näher an der Windschutzscheibe des Kraftfahrzeugs gelegene, in der Figur linke Vertiefung 16 ist von geringerer Tiefe als die übrigen Vertiefungen 16, die bis zur TPO-Folie 11 reichen. Der Abstand zwischen der tiefsten Stelle der linken Vertiefung 16 und der TPO-Folie 11 beträgt beispielsweise 1,5 mm.

Das Basisteil 10 ist von einem als Trägerstruktur dienenden kastenförmigen Strukturelement 18 unterstützt, von dem in der Figur Seitenwandabschnitte 23, 24 und Auflageabschnitte 25, 26 zu erkennen sind.

Das Basisteil 10 ist mit dem Strukturelement 18 an den sich parallel zum Basisteil 10 erstreckenden Abschnitten 25, 26 durch Vibrationsschweißen fest verbunden, wobei grundsätzlich die Verbindung auch auf andere Weise erfolgen kann. Das Strukturelement 18 ist aus einem anderen Material als das Basiselement 10 hergestellt.

In seinem im eingebauten Zustand der Windschutzscheibe des Kraftfahrzeugs zugewandten Bereich kann das Basisteil 10 von einem weiteren, nicht dargestellten Strukturelement unterstützt sein.

Der entfernbare Bereich 12 des Basisteils 10 ist als Luftsackdeckel ausgebildet, der das Strukturelement 18 lediglich im Bereich der Verhautungen 17 berührt und von einem zurückspringenden Bereich 26a des Abschnitts 26 des Strukturelementes 18 beabstandet ist.

Die vom Basisteil 10 wegweisenden Abschnitte 23, 24 des Strukturelementes 18 bilden einen Schußkanal 22 für einen sich aufblasenden Luftsack, der im eingebauten Zustand in einem nicht dargestellten Luftsackmodul unterhalb des als Luftsackdeckel dienenden entfernbaren Bereiches 12 des Basisteils 10 angeordnet ist.

Wenn im Crashfall der Luftsack aufgeblasen wird, sich durch den Schußkanal 22 hindurch ausbreitet und gegen den entfernbaren Bereich 12 drückt, wird das Basisteil 10 an denjenigen Schwachstellen, die als bis zur TPO-Folie 11 reichende Vertiefungen 16 und damit als Solibruchstellen ausgebildet sind, aufgebrochen. Der entfernbare Bereich 12 kann sich dann öffnen und wird aufgrund seiner Verbindung mit dem Basisteil 10 im Bereich der in der Figur linken Vertiefung 16 in Richtung der Windschutzscheibe des Fahrzeugs aufgeschwenkt.

Die der Windschutzscheibe des Fahrzeugs zugewandte Schwachstelle 16 des Basisteils 10, d. h. das Material des Basisteils 10 sowie die TPO-Folie 11 im Bereich der in der Figur linken Vertiefung 16 wirken somit als ein Scharnierbereich, an dem der entfernbare Bereich 12 verankert ist, so daß der entfernbare Bereich 12 nicht durch den Fahrzeuginnenraum geschleudert werden kann.

Alternativ kann auch ein separater Luftsackdeckel vorgesehen sein, der an der Rückseite des Basisteils 10 fest mit dem entfernbaren Bereich 12 verbunden und einstückig mit dem Strukturelement 18 ausgebildet ist. Beispielsweise kann ein derartiger Luftsackdeckel mit dem vom Basisteil 10 wegweisenden Abschnitt 23 des Strukturelementes 18 über einen Scharnierbereich reduzierter Materialstärke verbunden sein.

Es ist auch möglich, einen Luftsackdeckel als separates Bauteil vorzusehen und am Strukturelement 18 mittels eines beispielsweise aus Nylon hergestellten Fangbandes zu verankern.

### Bezugszeichenliste

- 10: Basisteil
- 11: Überzug, Folie
- 12: entfernbarer Bereich
- 16: Schwachstellen, Vertiefungen
- 17: Verhautungen
- 18: Strukturelement
- 22: Schußkanal
- 23 - 26: Abschnitte des Strukturelementes
- 26a: zurückspringender Bereich

## Patentansprüche

1. Armaturentafel für Kraftfahrzeuge mit einem Basisteil (10), das einen durch einen sich aufblasenden Luftsack entfernbaren Bereich (12) aufweist, der einen Teil der im eingebauten Zustand zum Fahrgastraum weisenden Fläche des Basisteils (10) bildet, wobei das Basisteil (10) aus einem Kunststoff geringer Dichte, vorzugsweise einem aufgeschäumten Kunststoff, insbesondere expandiertem Polypropylen (EPP) hergestellt ist.

2. Armaturentafel nach Anspruch 1,
dadurch **gekennzeichnet,**
daß der entfernbare Bereich (12) des Basisteils (10) als am Fahrzeug verankerbarer, durch einen sich aufblasenden Luftsack beaufschlagbarer Luftsackdeckel ausgebildet ist.

3. Armaturentafel nach zumindest einem der vorhergehenden Ansprüche,
dadurch **gekennzeichnet,**
daß der entfernbare Bereich (12) des Basisteils (10) durch insbesondere eine geringere Stärke als umgebendes Material aufweisende Schwachstellen (16) des Basisteils (10) festgelegt ist.

4. Armaturentafel nach zumindest einem der vorhergehenden Ansprüche,
dadurch **gekennzeichnet,**
daß Schwachstellen (16) des Basisteils (10) in Form von Einschnitten und/oder bevorzugt nutartigen, insbesondere V-förmigen Vertiefungen vorgesehen sind.

5. Armaturentafel nach zumindest einem der vorhergehenden Ansprüche,
dadurch **gekennzeichnet,**
daß Einschnitte bzw. Vertiefungen an der Rückseite des Basisteils (10) vorgesehen und im eingebauten Zustand vom Fahrgastraum aus unsichtbar sind.

6. Armaturentafel nach zumindest einem der vorhergehenden Ansprüche,
dadurch **gekennzeichnet,**
daß das Basisteil (10) zumindest im Bereich von Einschnitten bzw. Vertiefungen an der Rückseite des Basisteils (10) Verhautungen (17) aufweist.

7. Armaturentafel nach zumindest einem der vorhergehenden Ansprüche,
dadurch **gekennzeichnet,**
daß wenigstens eine Schwachstelle (16) des Basisteils (10) als Scharnierbereich ausgebildet ist, wobei bevorzugt diese Schwachstelle als Einschnitt oder V-förmige Vertiefung (16) ausgebildet ist, dessen bzw. deren Tiefe geringer ist als diejenige von jeweils als Sollbruchstelle dienenden Einschnitten bzw. Vertiefungen (16).

8. Armaturentafel nach zumindest einem der vorhergehenden Ansprüche,
dadurch **gekennzeichnet,**
daß die im eingebauten Zustand zum Fahrgastraum weisende Fläche des Basisteils (10) mit einem Überzug (11) bevorzugt in Form einer insbesondere aus einem thermoplastischen Polyolefin (TPO) hergestellten Kunststoffolie oder aus einem modifizierten Mehrkomponentenmaterial versehen ist.

9. Armaturentafel nach zumindest einem der vorhergehenden Ansprüche,
dadurch **gekennzeichnet,**
daß ein Strukturelement (18) als Verstärkungs- und/oder Trägerstruktur für das Basisteil (10) ausgebildet ist, wobei bevorzugt das Basisteil (10) und das Strukturelement (18) fest miteinander verbunden, insbesondere verschweißt sind.

10. Armaturentafel nach zumindest einem der vorhergehenden Ansprüche,
dadurch **gekennzeichnet,**
daß ein Strukturelement (18) zumindest bereichsweise als Schußkanal (22) für einen sich aufblasenden Luftsack ausgebildet ist.

11. Armaturentafel nach zumindest einem der vorhergehenden Ansprüche,
dadurch **gekennzeichnet,**
daß ein am Fahrzeug verankerbarer, durch einen sich aufblasenden Luftsack beaufschlagbarer Luftsackdeckel an der Rückseite des Basisteils (10) fest mit dem entfernbaren Bereich (12) verbunden ist.

12. Armaturentafel nach zumindest einem der vorhergehenden Ansprüche,
dadurch **gekennzeichnet,**
daß ein Luftsackdeckel an wenigstens einem fest mit der Fahrzeugkarosserie verbindbaren, bevorzugt aus dem gleichen Material wie der Luftsackdeckel hergestellten Strukturelement (18) verankert, insbesondere verschwenkbar angebracht ist.

13. Armaturentafel nach zumindest einem der vorhergehenden Ansprüche,
dadurch **gekennzeichnet,**
daß ein Luftsackdeckel einstückig mit einem Strukturelement (18) ausgebildet ist, wobei bevorzugt zwischen dem Luftsackdeckel und dem Strukturelement (18) wenigstens ein Scharnierbereich reduzierter Materialstärke vorgesehen ist.

14. Armaturentafel nach zumindest einem der vorhergehenden Ansprüche,
dadurch **gekennzeichnet,**
daß der Luftsackdeckel mit einem Strukturelement (18) über ein bevorzugt aus Nylon hergestelltes Fangband verbunden ist.
